# EUROPÄISCHE PATENTSCHRIFT

(11) **EP 2 536 606 B1**
(45) Veröffentlichungstag und Bekanntmachung des Hinweises auf die Patenterteilung: **26.11.2014**
(21) Anmeldenummer: 11712156.6
(22) Anmeldetag: 22.01.2011
(51) Int. Cl.: B60T 8/172

(54) **VERFAHREN ZUR AUTOMATISCHEN PRÄVENTION VON AQUAPLANING**
METHOD FOR AUTOMATICALLY PREVENTING AQUAPLANING
PROCÉDÉ DE PRÉVENTION AUTOMATIQUE D'AQUAPLANING

(30) Priorität: 17.02.2010 DE 102010008258
(43) Veröffentlichungstag der Anmeldung: 26.12.2012
(73) Patentinhaber: Conti Temic Microelectronic GmbH, 90411 Nürnberg (DE); Continental Teves AG & Co. OHG, 60488 Frankfurt (DE)
(72) Erfinder: MEHR, Wilfried, A-6960 Wolfurt (AT); STRAUSS, Matthias, 64319 Pfungstadt (DE); ECKERT, Alfred, 55129 Mainz-Hechtsheim (DE)
(86) Internationale Anmeldenummer: PCT/DE2011/000063
(87) Internationale Veröffentlichungsnummer: WO 2011/100943

(56) Entgegenhaltungen:
- WO-A1-03/077222
- WO-A2-02/25291
- DE-A1-102006 022 080
- DE-B3-102004 016 288

## Beschreibung

Die Erfindung ein Verfahren zur automatischen Prävention von Aquaplaning während des Fahrbetriebs eines Kraftfahrzeugs auf einer Fahrstrecke.

Der Nachteil bestehender Systeme, wie bspw. Antiblockiersysteme (ABS) oder Fahrdynamikregelungen (EPS, ESC) bei Auftreten von Aquaplaning besteht darin, dass sie erst reagieren, wenn der Zustand des Aquaplaning kurz bevorsteht oder bereits eingesetzt hat.

So ist bspw. aus der DE 100 60 333 A1 ein Verfahren zur Erkennung der Gefahr des Auftretens von Aquaplaning bekannt, bei dem indirekt aus fahrdynamischen Größen und Zustandsdaten des Fahrzeugs auf das Vorhandensein von Aquaplaninggefahr geschlossen wird. Hierzu wird eine Vorrichtung vorgeschlagen, die erste Mittel enthält, mit denen eine erste Vortriebsgröße ermittelt wird, die den Vortrieb des Fahrzeugs beschreibt, der aufgrund des Betriebszustandes des Motors und des Antriebsstranges zu erwarten ist, und zweite Mittel enthält, mit denen eine zweite Vortriebsgröße ermittelt wird, die den im Fahrbetrieb des Fahrzeugs vorliegenden Vortrieb beschreibt, der sich aufgrund der auf das Fahrzeug wirkenden Längsbeschleunigung einstellt, wobei in Abhängigkeit einer zwischen der ersten und der zweiten Vortriebsgröße vorliegenden Abweichung auf das Vorhandensein der Aquaplaninggefahr geschlossen wird.

Ferner wird in dieser DE 100 60 333 A1 bei erkannter Aquaplaninggefahr vorgeschlagen, den Fahrer zu warnen, bspw. durch Darstellung eines relativen Maßes für den Kraftschlussverlust, oder diese Information einer Vorrichtung, bspw. ESP zur Beeinflussung einer die Fahrzeugbewegung beschreibenden Größe zuzuführen, um bspw. Motor- und/oder Bremseingriffe zur Geschwindigkeitsreduzierung durchzuführen.

Aus der DE 10 2004 016 288 B3 ist ein Verfahren zur Prävention von Aquaplaning bekannt, bei dem während des Fahrbetriebs des Fahrzeugs eine Bestimmung des Fahrbahnreibwerts durchgeführt wird. Bei dem Verfahren werden Schwingungen eines Reifens erfasst und zumindest eine Charakteristik der Reifenschwingung, insbesondere ein Frequenzspektrum oder ein Zeitbereichsspektrum, ausgewertet.

Die WO 03/077222 A1 zeigt ein Verfahren zur automatischen Fahrzeugführung, bei dem Infrastrukturdaten für zumindest einen unmittelbar voraus liegenden Abschnitt der Fahrtstrecke drahtlos an ein Fahrzeug übermittelt werden. Die Infrastrukturdaten können dabei neben Daten, die den Verlauf der Fahrbahn repräsentieren, auch Daten umfassen, die Streckenverbote und/oder Hinweise auf Gefahrenstellen beinhalten.

Aus der WO 02/25291 A2 ist weiterhin ein Verfahren zur Unterstützung eines Fahrzeugführers bekannt, bei dem der Zustand des Fahrzeugführers und des Fahrzeugs sowie die Umgebungsbedingungen berücksichtigt werden. Im Zusammenhang mit den Umgebungsbedingungen werden beispielsweise der Fahrbahnzustand und die Verkehrsbedingungen sowie die Wetterbedingungen ermittelt.

Die DE 10 2006 022 086 A1 offenbart ein Verfahren zur Regelung der Geschwindigkeit eines Kraftfahrzeugs, bei dem Eigenschaften von vor dem Fahrzeug liegenden, zukünftig zu befahrenden Straßenabschnitten unter Zuhilfenahme entsprechender, gespeicherter Informationen erfasst und eine an die Eigenschaften der Straßenabschnitte angepasste Geschwindigkeit auf Basis der gespeicherten Informationen ermittelt werden. Ferner sind Verfahren zur Stabilisierung des Fahrzeugs bei Auftreten von Aquaplaning bekannt, so bspw. aus der DE 10 2008 034 908 A1. Hiernach wird ein Sollverhalten des Fahrzeugs bestimmt und ein Giermoment des Fahrzeugs derart erzeugt, dass ein Istverhalten des Fahrzeugs dem Sollverhalten angenähert wird.

Schließlich sind auch sogenannte Car-to-Car-Communication (C2C)-Systeme bekannt, um bspw. fahrsteckenbezogene Verkehrs- und Wetterinformationen zwischen Fahrzeugen auszutauschen. Mit der Bereitstellung von Wetterinformationen und Straßenzustandsdaten beschäftigt sich bspw. die DE 101 39 668 A1.

Aufgabe der Erfindung ist es daher, ein Verfahren der eingangs genannten Art anzugeben, mit dem eine frühzeitige Erkennung des Auftretens einer Aquaplaninggefahr möglich ist und gleichzeitig möglichst präventiv das Auftreten bzw. die Gefahr von Aquaplaning verhindert bzw. vermindert wird sowie die vorgenannten Nachteile vermieden werden.

Diese Aufgabe wird gelöst durch ein Verfahren mit den Merkmalen des Patentanspruchs 1.

Hiernach ist bei dem Verfahren zur automatischen Prävention von Aquaplaning während des Fahrbetriebs eines Kraftfahrzeugs auf einer Fahrstrecke erfindungsgemäß vorgesehen, dass
a) streckenabschnittsbezogene Informationen hinsichtlich der Gefahr von Aquaplaning im Kraftfahrzeug bereitgestellt werden,
b) wenigstens eine Sensoreinrichtung zur Bestimmung einer nassen Fahrbahn vorgesehen ist, und
c) bei Vorliegen eines Streckenabschnittes der Fahrstrecke mit Aquaplaninggefahr und der Detektion einer nassen Fahrbahn eine Assistenzfunktion zur Prävention von Aquaplaning durchgeführt wird.

Dabei wird durch Verkehrszeichenerkennung eines Aquaplaning anzeigendes Verkehrsschildes die streckenabschnittsbezogene Information gemäß Verfahrensschritt a) bereitgestellt.

Da zunehmend viele Fahrzeuge mit modernen Fahrerassistenzsystemen ausgerüstet sind, die auch ein elektronisches Verkehrszeichenerkennungssystem umfassen, um bspw. den Fahrer bei einer Geschwindigkeitsüberschreitung zu warnen, ist es daher ohne zusätzlichen Aufwand möglich, das als Gefahrzeichen eingestufte Verkehrszeichen "Schleudergefahr bei Nässe oder Schmutz" zu detektieren und als streckenabschnittsbezogene Informationen hinsichtlich der Gefahr von Aquaplaning gemäß der Erfindung bereitzustellen.

Die Verkehrszeichenerkennung erfolgt mittels einer Kamera, die die Umgebung vor dem Fahrzeug aufnimmt und entsprechende Bilddaten an einen Bordcomputer liefert, der mittels eines Algorithmus die Bilddaten analysiert und klassifiziert, um hieraus ein Verkehrszeichen zu identifizieren.

Ein solches Verfahren ist bspw. aus der DE 198 52 631 A1 bekannt.

Auch kann die streckenabschnittsbezogene Information hinsichtlich des Vorliegens der Gefahr von Aquaplaning zusätzlich mittels einer Telematikfunktion bereitgestellt werden. Das bedeutet bspw., dass Fahrzeuge untereinander auf der Straße und über eine eingerichtete Infrastruktur, wie bspw. V2V (Vehicle to Vehicle) oder C2C (Car to Car) kommunizieren und Daten, welche im Fahrzeug vorhanden sind, insbesondere auf Aquaplaning hinweisende Daten erfassen und austauschen, ggf. über einen zentralen Rechner. Mit diesen Daten kann zum Beispiel festgestellt werden, ob es regnet, also die Gefahr von Aquaplaning besteht oder ob sich gerade ein Stau bildet. Schließlich kann auch im Rahmen eines im Kraftfahrzeug installierten Navigationssystem zusätzlich eine digitale Karte verwendet werden, die streckenabschnittsbezogene Informationen über eine Aquaplaninggefahr aufweisen und diese, wenn das Fahrzeug eine solche Strecke befährt, zur Verfügung stellt.

Die Information über das Vorliegen einer Aquaplaninggefahr wird verknüpft mit der Information, ob die gerade befahrene Fahrbahn des Kraftfahrzeugs nass ist. Diese Nässe-Information wird mittels einer Sensoreinrichtung gemäß Verfahrensschritt b), vorzugsweise als Regensensor zur Verfügung gestellt.

Alternativ oder zusätzlich kann auch eine die Scheibenwischer-Aktivität auswertende Sensoreinrichtung zur Bestimmung einer nassen Fahrbahn vorgesehen werden.

Besonders vorteilhaft ist es, die Sensoreinrichtung zur Bestimmung der Nässe-Information als Aquaplaningsensoreinheit auszubilden, die fahrdynamische Fahrzeugdaten und Fahrzeugzustandsdaten auswertet. Hierfür ist bspw. das in der DE 100 60 333 A1 beschrieben Verfahren geeignet.

Schließlich kann zur Bestimmung einer nassen Fahrbahn auch ein die Fahrbahnoberfläche detektierender optischer Sensor, vorzugsweise eine Kamera verwendet werden.

Wurde sowohl ein Streckenabschnitt mit Aquaplaninggefahr erkennt als auch mittels der Sensoreinrichtung eine nasse Fahrbahn detektiert, wird eine Assistenzfunktion automatisch eingeleitet, die eine präventive Maßnahme zur Verhinderung von Aquaplaning oder zumindest zur Reduzierung der Gefahr des Auftretens von Aquaplaning durchführt.

Vorzugsweise kann eine solche Assistenzfunktion eine optische, akustische und/oder haptische Warnung des Fahrers vor Aquaplaning darstellen, indem bspw. die Aquaplaninggefahr im Instrumenten-Cluster des Fahrzeugs dem Fahrer angezeigt wird. Eine weitere Maßnahme kann darin bestehen, insbesondere wenn der Fahrer auf die Warnung nicht reagiert, dass eine durch eine Betätigung des Bremspedals des Kraftfahrzeugs ausgelöste Verzögerungsanforderung zur Umsetzung an den Antriebsmotor des Kraftfahrzeugs weitergeleitet wird und dort derart umgesetzt wird, dass ein Blockieren der Fahrzeugräder vermieden wird.

Eine Assistenzfunktion kann auch darin bestehen, dass eine durch eine Betätigung des Gaspedals des Kraftfahrzeugs ausgelöste Beschleunigungsanforderung mit einem geringeren Wert über eine längere Zeitdauer im Vergleich zur Beschleunigungsanforderung ausgeführt oder vollständig unterdrückt wird. Damit wird verhindert, dass bspw. durch starkes Beschleunigen tatsächlich Aquaplaning auftritt.

Des Weiteren kann die Assistenzfunktion darin bestehen, dass die Dämpfung des Fahrwerks des Kraftfahrzeugs eingestellt, insbesondere hart einstellt wird.

Hinsichtlich der Sicherheit ist eine Assistenzfunktion von Bedeutung, die die Fahrzeuggeschwindigkeit auf einen maximalen Wert einstellt bzw. reduziert, vorzugsweise auf 80 km/h, welche als empfohlene Geschwindigkeit gilt, bei der noch kein Aufschwimmen des Fahrzeugs, also kein Aquaplaning auftritt.

Schließlich ist es besonders von Vorteil, die Assistenzfunktion in ein Fahrerassistenzsystem oder in aktive Sicherheitssysteme einzubetten.

So kann vorzugsweise die Assistenzfunktion die Einstellung eines ABS-System des Kraftfahrzeugs vornehmen, insbesondere das ABS-System empfindlicher einstellen.

Desweiteren ist hierfür auch eine Fahrdynamikregelung geeignet, deren Einstellung von der Assistenzfunktion übernommen wird, insbesondere diese empfindlicher einstellt. Besonders vorteilhaft ist es, wenn hierdurch die Fahrdynamikregelung derart parametriert wird, dass bei einer elektronisch angeforderten Bremsleistung für die einzelnen Fahrzeugräder eine Blockierung vermieden wird.

Bei einer vorteilhaften Ausgestaltung des erfindungsgemäßen Verfahrens, umfasst die Durchführung einer Assistenzfunktion zur Prävention von Aquaplaning die Anpassung eines Geschwindigkeitsregelungssystems, beispielsweise eines CC (Cruise Control) oder ACC (Adaptive Cruise Control) Systems. CC Systeme können die Geschwindigkeit des Kraftfahrzeugs automatisch bei einem vorgegebenen Wert konstant halten. Bei einem ACC System kann die Geschwindigkeit des Kraftfahrzeugs zusätzlich auf die Geschwindigkeit des vorrausfahrenden Fahrzeugs angepasst werden. Die Anpassung erfolgt vorzugsweise nur bei aktiven Geschwindigkeitsregelungssystemen. Ein Geschwindigkeitsregelungssystem ist aktiv, wenn das System zum Zeitpunkt bzw. während der Durchführung des erfindungsgemäßen Verfahrens eingeschaltet ist und die Geschwindigkeit des Kraftfahrzeugs regelt.

Kommt das Kraftahrzeug in einen Bereich mit Aquaplaninggefahr, würde bei bekannten Geschwindigkeitsregelungssystemen die Geschwindigkeit des Kraftfahrzeugs unverändert beibehalten werden.

Bei einer vorteilhaften Ausgestaltung des erfindungsgemäßen Verfahrens kann ein Geschwindigkeitsregelungssystem in einer solchen Situation derart angepasst werden, dass die Geschwindigkeit des Kraftfahrzeugs verringert wird. Dies geschieht vorzugsweise dann, wenn sowohl ein Streckenabschnitt mit Aquaplaninggefahr erkannt als auch mittels einer Sensoreinrichtung eine nasse Fahrbahn detektiert wurde.

Handelt es sich bei dem Geschwindigkeitsregelungssystem um ein ACC System, insbesondere mit Mitteln zur Detektion von Geschwindigkeitsbegrenzungen, kann bei erkannter Aquaplaninggefahr die Geschwindigkeitsbegrenzung berücksichtigt, die für Nässe vorgeschrieben und/oder empfohlen ist, z.B. 80 km/h. Die aktuell gültige Geschwindigkeitsbegrenzung kann mittels des ACC Systems selbst oder auch beispielsweise mit Hilfe einer GPS-, Kamera- und/oder Transponder-basierten Verkehrszeichenerkennung bereitgestellt werden.

In einer besonderen Ausgestaltung wird ein Geschwindigkeitsregelungssystem bei erkannter Aquaplaninggefahr ganz abgeschaltet. Die Abschaltung erfolgt dabei insbesondere nach einfacher oder mehrfacher Information an den Fahrer des Kraftfahrzeugs, beispielsweise mittels haptischer, akustischer und/oder optischer Signale.

Umfasst das Kraftfahrzeug, in welchem das erfindungsgemäße Verfahren zum Einsatz kommt, hoch automatisierte Systeme, die Längs- und/oder Querregelungsaufgaben des Fahrers teilweise oder vollständig übernehmen, können diese bei erkannter Aquaplaninggefahr abgeschaltet werden. Die Abschaltung erfolgt dabei vorzugsweise nach Information an den Fahrer des Kraftfahrzeugs. Übernimmt der Fahrer seine Fahraufgaben daraufhin nicht, kann die Geschwindigkeit des Kraftfahrzeugs automatisch herabgesetzt und/oder eine Abbremsung des Kraftfahrzeugs bis zum Stillstand vorgenommen werden.

Schließlich ist es vorgesehen, dass die Durchführung einer Assistenzfunktion durch den Fahrer des Kraftfahrzeugs zu jedem Zeitpunkt ausgeschaltet werden kann. Hierfür ist eine geeignete Mensch-Maschine-Schnittstelle bereitzustellen.

Natürlich ist es aus sicherheitsrelevanter Sicht vorteilhaft, mehrere der aufgeführten Maßnahmen in einer Assistenzfunktion zusammenzufassen und diese gleichzeitig oder auch zeitlich versetzt durchzuführen.

Der wesentlichste Vorteil des erfindungsgemäßen Verfahrens liegt darin, dass durch die Assistenzfunktion automatisch präventive Schutzmaßnahmen gegen das Auftreten von Aquaplaning eingeleitet werden und nicht erst, wenn aufgrund indirekter Messungen Aquaplaning kurz bevorsteht oder bereits eingesetzt hat. Mit diesen präventiven Schutzmaßnahmen wird auch die Gefahr des Auftretens von Aquaplaning maßgeblich gesenkt.

## Patentansprüche

1. Verfahren zur automatischen Prävention von Aquaplaning während des Fahrbetriebs eines Kraftfahrzeugs auf einer Fahrstrecke,
**dadurch gekennzeichnet, dass**
a) streckenabschnittsbezogene Informationen hinsichtlich der Gefahr von Aquaplaning mittels Verkehrszeichenerkennung mittels Kamera eines Aquaplaning anzeigenden Verkehrsschildes im Kraftfahrzeug bereitgestellt werden,
b) wenigstens eine Sensoreinrichtung zur Bestimmung einer nassen Fahrbahn vorgesehen ist, und
c) bei Vorliegen eines Streckenabschnittes der Fahrstrecke mit Aquaplaning-Gefahr und der Detektion einer nassen Fahrbahn eine Assistenzfunktion zur Prävention von Aquaplaning durchgeführt wird.

2. Verfahren nach Anspruch 1,
**dadurch gekennzeichnet, dass**
zur Bestimmung einer nassen Fahrbahn gemäß Verfahrensschritt b) zumindest eine der folgenden Sensoreinrichtungen vorgesehen ist:
b1) Regensensor
b2) Scheibenwischer-Aktivität auswertende Sensoreinheit
b3) Aquaplaningsensoreinheit, die fahrdynamische Fahrzeugdaten und Fahrzeugzustandsdaten zur Bestimmung einer nassen Fahrbahn auswertet
b4) Fahrbahnoberfläche detektierender optischer Sensor, vorzugsweise eine Kamera

3. Verfahren nach einem der vorhergehenden Ansprüche,
**dadurch gekennzeichnet, dass**
die Assistenzfunktion gemäß Verfahrensschritt c) zumindest eine der folgenden Maßnahmen umfasst:
c1) Optische, akustische und/oder haptische Warnung des Fahrers vor Aquaplaning
c2) Einstellung der Dämpfung des Fahrwerks des Kraftfahrzeugs, insbesondere eine harte Einstellung des Fahrwerks
c3) Einstellung bzw. Reduzierung der Fahrzeuggeschwindigkeit auf einen maximalen Wert, vorzugsweise auf 80 km/h
c4) Einstellung eines ABS-Systems des Kraftfahrzeugs, insbesondere eine empfindlichere Einstellung des ABS-Systems
c5) Einstellung einer Fahrdynamikregelung des Kraftfahrzeugs, insbesondere eine empfindlichere Einstellung der Fahrdynamikregelung
c6) Anpassung eines aktiven Geschwindigkeitsregelungssystems

4. Verfahren nach Anspruch 3,
**dadurch gekennzeichnet, dass**
es sich bei dem Geschwindigkeitsregelungssystem um ein Cruise Control (CC) oder ein Adaptive Cruise Control (ACC) System handelt.

5. Verfahren nach Anspruch 3 oder 4,
**dadurch gekennzeichnet, dass**
die Anpassung des aktiven Geschwindigkeitsregelungssystems die Verringerung der Fahrzeuggeschwindigkeit umfasst.

6. Verfahren nach einem der Ansprüche 3 bis 5,
**dadurch gekennzeichnet, dass**
die Anpassung des aktiven Geschwindigkeitsregelungssysteme die Verringerung der Fahrzeuggeschwindigkeit auf eine bei Straßennässe vorgeschriebene oder empfohlene Fahrzeuggeschwindigkeit umfasst.

7. verfahren einem der Ansprüche 3 bis 6,
**dadurch gekennzeichnet, dass**
die Anpassung des aktiven Geschwindigkeitsregelungssystems das Abschalten des Geschwindigkeitsregelungssystems umfasst.

8. Verfahren nach Anspruch 3,
**dadurch gekennzeichnet, dass**
die Assistenzfunktion die Fahrdynamikregelung derart parametriert, dass bei einer elektronisch angeforderten Bremsleistung für einzelne Fahrzeugräder eine Blockierung vermieden wird.

9. Verfahren nach einem der vorhergehenden Ansprüche,
**dadurch gekennzeichnet, dass**
die Durchführung einer Assistenzfunktion gemäß Verfahrensschritt c} das Abschalten eines Systems zur automatischen Längs- und Querregelung des Kraftfahrzeugs umfasst.

10. Verfahren nach Anspruch 7 oder 9,
**dadurch gekennzeichnet, dass**
das Abschalten des jeweiligen Systems nach vorheriger Information des Fahrers des Kraftfahrzeugs erfolgt.

11. Verfahren nach Anspruch 9 oder 10,
**dadurch gekennzeichnet, dass**
die Geschwindigkeit des Kraftfahrzeugs herabgesetzt oder das Kraftfahrzeug bis zum Stillstand abgebremst wird, wenn der Fahrer die Quer- und Längsregelung nicht übernimmt.

12. Verfahren nach einem der vorhergehenden Ansprüche,
**dadurch gekennzeichnet, dass**
eine durch eine Betätigung des Bremspedals des Kraftfahrzeugs ausgelöste Verzögerungsanforderung durch die Assistenzfunktion gemäß Verfahrensschritt c) zur Umsetzung an den Antriebsmotor des Kraftfahrzeugs weitergeleitet wird, wobei die Verzögerungsanforderung derart umgesetzt wird, dass ein Blockieren der Fahrzeugräder vermieden wird.

13. Verfahren nach einem der vorhergehenden Ansprüche,
**dadurch gekennzeichnet, dass**
eine durch eine Betätigung des Gaspedals des Kraftfahrzeugs ausgelöste Beschleunigungsanforderung durch die Assistenzfunktion gemäß Verfahrensschritt c) mit einem geringeren Wert über eine längere Zeitdauer im Vergleich zur Beschleunigungsanforderung ausgeführt oder unterdrückt wird.

14. Verfahren nach einem der vorhergehenden Ansprüche,
**dadurch gekennzeichnet, dass**
die Durchführung einer Assistenzfunktion gemäß Verfahrensschritt c) durch den Fahrer des Kraftfahrzeugs zu jedem Zeitpunkt ausgeschaltet werden kann.

## Claims

1. A method of automatically preventing aquaplaning during driving operation of a motor vehicle on a route, **characterized in that**
a) information relating to a section of the route and regarding the risk of aquaplaning, by carrying out a camera-based road sign recognition of a road sign which indicates aquaplaning, is provided in the motor vehicle,
b) at least one sensor device for determining a wet roadway is provided, and
c) an assistance function is carried out to prevent aquaplaning if there is a section of the route with a risk of aquaplaning and if a wet roadway is detected.

2. The method according to Claim 1, **characterized in that** in order to determine a wet roadway in accordance with method step b) at least one of the following sensor devices is provided:
b1) a rain sensor,
b2) a sensor unit which evaluates windshield wiper activity,
b3) an aquaplaning sensor unit which evaluates vehicle-movement-dynamics vehicle data and vehicle state data in order to determine a wet roadway,
b4) an optical sensor which detects the roadway surface, preferably a camera.

3. The method according to any one of the preceding claims, **characterized in that** the assistance function in accordance with method step c) comprises at least one of the following measures:
c1) a visual, acoustic and/or haptic warning of aquaplaning to the driver,
c2) adjusting the damping of the running gear of the motor vehicle, in particular adjusting a hard damping of the running gear,
c3) adjusting and/or reducing the vehicle speed to a maximum value, preferably to 80 km/h,
c4) adjusting an ABS system of the motor vehicle, in particular making the ABS system more sensitive,
c5) adjusting a vehicle-movement-dynamics control system of the motor vehicle, in particular making the vehicle-movement-dynamics control system more sensitive,
c6) adjusting an active speed control system.

4. The method according to Claim 3, **characterized in that** the speed control system is a cruise control (CC) system or an adaptive cruise control (ACC) system.

5. The method according to Claim 3 or 4, **characterized in that** the adjustment of the active speed control system comprises reducing the vehicle speed.

6. The method according to any one of Claims 3 to 5, **characterized in that** the adjustment of the active speed control system comprises reducing the vehicle speed to a speed that is mandatory or recommended for wet roads.

7. The method according to any one of Claims 3 to 6, **characterized in that** the adjustment of the active speed control system comprises switching off the speed control system.

8. The method according to Claim 3, **characterized in that** the assistance function parameterizes the vehicle-movement-dynamics control system such that the wheels of the motor vehicle do not lock when there is an electronic request for braking power for individual wheels of the motor vehicle.

9. The method according to any one of the preceding claims, **characterized in that** the carrying out of an assistance function in accordance with method step c) comprises switching off a system for automatic longitudinal and lateral control of the motor vehicle.

10. The method according to Claim 7 or 9, **characterized in that** the driver of the motor vehicle is informed before the respective system is switched off.

11. The method according to Claim 9 or 10, **characterized in that** the speed of the motor vehicle is reduced or the motor vehicle is brought to a complete stop, if the driver does not take over lateral and longitudinal control of the motor vehicle.

12. The method according to any one of the preceding claims, **characterized in that** a deceleration request triggered by actuation of the brake pedal of the motor vehicle is forwarded by the assistance function in accordance with method step c) to the driving motor of the motor vehicle for implementing, whereby the deceleration request is implemented such that the vehicle's wheels do not lock.

13. The method according to any one of the preceding claims, **characterized in that** an acceleration request triggered by actuation of the accelerator pedal of the motor vehicle is implemented by the assistance function in accordance with method step c) with a lower value over a longer period of time in comparison to the acceleration request or is suppressed by the assistance function.

14. The method according to any one of the preceding claims, **characterized in that** the carrying out of an assistance function in accordance with method step c) can be deactivated by the driver of the motor vehicle at any time.

## Revendications

1. Procédé de prévention automatique de l'aquaplaning pendant le roulage d'un véhicule automobile sur un trajet,
**caractérisé en ce que**
a) des informations liées au tronçon de trajet et concernant le risque d'aquaplaning sont fournies dans le véhicule au moyen d'une détection de signalisation routière au moyen d'une caméra d'un panneau de signalisation indiquant l'aquaplaning,
b) au moins un dispositif de capteur est prévu pour la détermination d'une chaussée humide et,
c) en présence d'un tronçon de trajet du trajet présentant un risque d'aquaplaning et de la détection d'une chaussée humide, une fonction d'assistance destinée à la prévention de l'aquaplaning est réalisée.

2. Procédé selon la revendication 1,
**caractérisé en ce que**,
pour la détermination d'une chaussée humide selon l'étape de procédé b), au moins un des dispositifs de capteur suivants est prévu :
b1) capteur de pluie
b2) unité de capteur analysant l'activité des essuie-glace
b3) unité de capteur d'aquaplaning qui analyse des données du véhicule liées à la dynamique de conduite et des données d'état du véhicule pour la détermination d'un chaussée humide
b4) détecteur optique de détection de la surface de la chaussée, de préférence une caméra.

3. Procédé selon une des revendications précédentes,
**caractérisé en ce que**
la fonction d'assistance selon l'étape de procédé c) comprend au moins une des dispositions suivantes :
c1) avertissement optique, acoustique et/ou haptique du conducteur portant sur l'aquaplaning
c2) réglage de l'amortissement du châssis du véhicule automobile, en particulier un réglage dur du châssis
c3) réglage ou respectivement réduction de la vitesse du véhicule à une valeur maximale, de préférence à 80 km/h
c4) réglage d'un système ABS du véhicule automobile, en particulier un réglage plus sensible du système ABS
c5) réglage d'une régulation de la dynamique de conduite du véhicule automobile, en particulier un réglage plus sensible de la régulation de la dynamique de conduite
c6) adaptation d'un système actif de régulation de la vitesse.

4. Procédé selon la revendication 3,
**caractérisé en ce que**,
concernant le système de régulation de la vitesse, il s'agit d'un système Cruise Control (CC) ou d'un système Adptative Cruise Control (ACC).

5. Procédé selon la revendication 3 ou 4,
**caractérisé en ce que**
l'adaptation du système actif de régulation de la vitesse comprend la réduction de la vitesse du véhicule.

6. Procédé selon une des revendications 3 à 5,
**caractérisé en ce que**
l'adaptation du système actif de régulation de la vitesse comprend la réduction de la vitesse du véhicule à une vitesse du véhicule prescrite ou recommandée en cas de chaussée humide.

7. Procédé selon une des revendications 3 à 6,
**caractérisé en ce que**
l'adaptation du système actif de régulation de la vitesse comprend l'arrêt du système de régulation de la vitesse.

8. Procédé selon la revendication 3,
**caractérisé en ce que**
la fonction d'assistance paramètre la régulation de la dynamique de conduite de telle sorte que, en cas d'une puissance de freinage demandée électroniquement pour différentes roues du véhicule, un blocage est évité.

9. Procédé selon une des revendications précédentes,
**caractérisé en ce que**
la réalisation d'une fonction d'assistance selon l'étape de procédé c) comprend l'arrêt d'un système de régulation longitudinale et transversale automatique du véhicule automobile.

10. Procédé selon la revendication 7 ou 9,
**caractérisé en ce que**
l'arrêt du système respectif s'effectue après l'information préalable du conducteur du véhicule automobile.

11. Procédé selon la revendication 9 ou 10,
**caractérisé en ce que**
la vitesse du véhicule automobile est abaissée ou le véhicule automobile est freiné jusqu'à l'arrêt quand le conducteur ne prend pas en charge la régulation longitudinale et transversale.

12. Procédé selon une des revendications précédentes,
**caractérisé en ce**
**qu'**une demande de ralentissement déclenchée par un actionnement de la pédale de frein du véhicule automobile est, pour la mise en oeuvre, transmise au moteur d'entraînement du véhicule automobile par la fonction d'assistance selon l'étape de procédé c), la demande de ralentissement étant mise en oeuvre de telle sorte qu'un blocage des roues du véhicule est évité.

13. Procédé selon une des revendications précédentes,
**caractérisé en ce**
**qu'**une demande d'accélération déclenchée par un actionnement de la pédale d'accélérateur est réalisée ou empêchée par la fonction d'assistance selon l'étape de procédé c) avec une valeur plus faible sur une période de temps plus longue par comparaison avec la demande d'accélération.

14. Procédé selon une des revendications précédentes,
**caractérisé en ce que**
la réalisation d'une fonction d'assistance selon l'étape de procédé c) peut être mise hors service à tout moment par le conducteur du véhicule automobile.
